# EUROPEAN PATENT APPLICATION

(11) **EP 4 651 131 A2**
(43) Date of publication of application: **19.11.2025**
(21) Application number: 25193792.6
(22) Date of filing: 04.08.2025
(51) Int. Cl.: G10L 21/0208, G10L 15/20, G10L 21/0272

(54) **METHOD, APPARATUS, AND SYSTEM FOR COMPENSATING SPEECH COMMUNICATION, STORAGE MEDIUM, AND ELECTRONIC DEVICE**

(30) Priority: 19.03.2025 CN 202510328979
(71) Applicant: XG TECH PTE. LTD., Singapore 179098 (SG)
(72) Inventor: ZHU, Changbao, 179098 Singapore (SG); TIAN, Chuan, 179098 Singapore (SG); CHENG, Guangwei, 179098 Singapore (SG)
(74) Representative: Dehns Germany Partnerschaft mbB

(57) **Abstract**

Embodiments of this disclosure disclose a method, apparatus, and system for compensating speech communication, a storage medium, and an electronic device. The method includes: obtaining a first audio signal corresponding to at least one communication participant, and determining, based on a result of speech recognition on the first audio signal, communication fluency of a speech communication system regarding the at least one communication participant, as well as a factor contributing to the communication fluency, determining, based on the communication fluency and the factor contributing to the communication fluency, a target signal adjusting parameter of the speech communication system for the at least one communication participant, and adjusting, based on the target signal adjusting parameter, a second audio signal corresponding to the at least one communication participant, to obtain and play a third audio signal, wherein the second audio signal is an audio signal which is obtained regarding the at least one communication participant and is subsequent to the first audio signal in a time sequence. With embodiments of this disclosure, it is enabled to adaptively adjust a signal adjusting parameter for the at least one communication participant, to improve the communication fluency between at least one communication participant.

## Description

### TECHNICAL FIELD

This disclosure relates to field of speech recognition technology, and more particularly, to a method, apparatus, and system for compensating speech communication, a storage medium, and an electronic device.

### BACKGROUND

In some mobile space (such as car space), there are often loud echoes and complex noises. For example, while a car drives, there are multiple complex noises such as tire noise and wind noise from an external environment, engine noise from the car, etc. The echoes and the noises may interfere with communication between users in the space, affecting user communication fluency.

In related art, communication fluency is improved through an in car communication (ICC) algorithm. However, since an ICC parameter is fixed, applicable scenes are limited, and the problem of not fluent in-car communication cannot be solved for various scenes.

### SUMMARY

Embodiments of this disclosure provide a method, apparatus, and system for compensating speech communication, a storage medium, and an electronic device.

In one aspect, embodiments of this disclosure provide a method for compensating speech communication, including: obtaining a first audio signal corresponding to at least one communication participant, and determining, based on a result of speech recognition on the first audio signal, communication fluency of a speech communication system regarding the at least one communication participant, as well as a factor contributing to the communication fluency; determining, based on the communication fluency and the factor contributing to the communication fluency, a target signal adjusting parameter of the speech communication system for the at least one communication participant; and adjusting, based on the target signal adjusting parameter, a second audio signal corresponding to the at least one communication participant, to obtain and play a third audio signal, wherein the second audio signal is an audio signal which is obtained regarding the at least one communication participant and is subsequent to the first audio signal in a time sequence.

In another aspect, embodiments of this disclosure provide an apparatus for compensating speech communication, including: a first determining module, configured for obtaining a first audio signal corresponding to at least one communication participant, and determining, based on a result of speech recognition on the first audio signal, communication fluency of a speech communication system regarding the at least one communication participant, as well as a factor contributing to the communication fluency; a second determining module, configured for determining, based on the communication fluency and the factor contributing to the communication fluency, a target signal adjusting parameter of the speech communication system for the at least one communication participant; and a signal adjusting module, configured for adjusting, based on the target signal adjusting parameter, a second audio signal corresponding to the at least one communication participant, to obtain and play a third audio signal, wherein the second audio signal is an audio signal which is obtained regarding the at least one communication participant and is subsequent to the first audio signal in a time sequence.

In another aspect, embodiments of this disclosure provide a system for compensating speech communication, including: at least one microphone, a processing unit, and a device for compensating speech communication, wherein the at least one microphone is configured for obtaining a first audio signal corresponding to at least one communication participant; the processing unit is configured for determining, based on a result of speech recognition on the first audio signal, communication fluency of a speech communication system regarding the at least one communication participant, as well as a factor contributing to the communication fluency, and determining, based on the communication fluency and the factor contributing to the communication fluency, a target signal adjusting parameter of the speech communication system for the at least one communication participant; and the device for compensating speech communication is configured for adjusting, based on the target signal adjusting parameter, a second audio signal corresponding to the at least one communication participant, to obtain and play a third audio signal, wherein the second audio signal is an audio signal which is obtained regarding the at least one communication participant and is subsequent to the first audio signal in a time sequence.

In another aspect, embodiments of this disclosure provide a computer-readable storage medium which stores a computer program for implementing the method for compensating speech communication.

In another aspect, embodiments of this disclosure provide an electronic device which includes: a processor, and a memory configured for storing processor-executable instructions, wherein the processor is configured for reading and executing the processor-executable instructions in the memory to implement the method for compensating speech commmication.

Based on embodiments of this disclosure, for a speech communication system, a first audio signal corresponding to at least one communication participant is obtained, and communication fluency of the speech communication system regarding the at least one communication participant, as well as a factor contributing to the communication fluency, are determined based on a result of speech recognition on the first audio signal; then, a target signal adjusting parameter of the speech communication system for the at least one communication participant may be determined based on the communication fluency and the factor contributing to the communication fluency as determined. With a technical solution according to this disclosure, a parameter for adjusting a signal corresponding to a communication participant may be adjusted adaptively, which improves the communication fluency between at least one communication participant in the speech communication system. In addition, a target signal adjusting parameter is determined based on a factor contributing to the communication fluency, which implements targeted adjustment of a signal adjusting parameter of the speech communication system, which thereby helps improve efficiency of audio signal adjustment, and reduce memory power consumption by the speech communication system in audio signal adjustment.

A technical solution according to this disclosure is further elaborated below through the drawings and embodiments.

### BRIEF DESCRIPTION OF DRAWINGS

By describing embodiments of this disclosure in more detail in combination with the drawings, the above and other purposes, features, and vantages of this disclosure will become clearer. The drawings are for providing further understanding of embodiments of this disclosure, and constitute a part of the specification, which is used together with embodiments of this disclosure to explain this application, and constitutes no limitation to this application. In the drawings, identical reference signs generally represent identical components or steps.
FIG. 1 is a diagram of a system where this disclosure is applicable.
FIG. 2 is a flowchart of a method for compensating speech communication according to an illustrative embodiment of this disclosure.
FIG. 3 is a diagram of a scene of application of a method for compensating speech communication according to embodiments of this disclosure.
FIG. 4 is a flowchart of determining a target signal adjusting parameter in a method for compensating speech communication according to an illustrative embodiment of this disclosure.
FIG. 5 is a flowchart of a method for compensating speech communication according to another illustrative embodiment of this disclosure.
FIG. 6 is a flowchart of a method for compensating speech communication according to another illustrative embodiment of this disclosure.
FIG. 7 is a diagram of a structure of an apparatus for compensating speech communication according to an illustrative embodiment of this disclosure.
FIG. 8 is a diagram of a structure of an apparatus for compensating speech communication according to another illustrative embodiment of this disclosure.
FIG. 9 is a diagram of a structure of an electronic device according to an illustrative embodiment of this disclosure.

### DETAILED DESCRIPTION OF THE EMBODIMENTS

To explain this disclosure, illustrative embodiments of this disclosure are elaborated below with reference to accompanying drawings. Clearly, the embodiments described are merely some, rather than all, embodiments of this disclosure. It should be understood that this disclosure is not limited to the illustrative embodiments.

### Disclosure overview

In implementing this disclosure, the inventor discovers, through research, that with a present speech communication system, communication fluency is improved generally in a mode of in car communication and echo cancellation and noise reduction (ECNR). However, in an existing technical solution, ICC and ECNR parameters are fixed, a signal adjusting parameter cannot be determined adaptively, applicable scenes are limited, and an audio signal adjusting parameter cannot be adjusted adaptively based on speech fluency in user communication as well as a factor contributing to the communication fluency, where audio signal adjustment is poorly targeted.

### Illustrative system

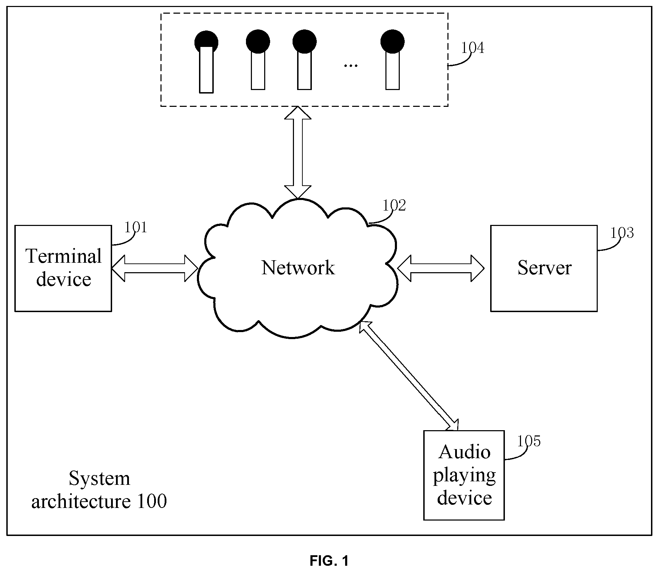

FIG. 1 shows an illustrative system architecture 100 where a method for compensating speech communication or an apparatus for compensating speech communication according to embodiments of this disclosure is applicable.

As shown in FIG. 1, the system architecture 100 may include at least one terminal device 101 of at least one communication participant, a network 102, a server 103, an array of microphones 104, and an audio playing device 105. The network 102 is a medium configured for providing a communication link between a terminal device 101 and the server 103, or a medium configured for providing a communication link between different terminal devices 101. The network 102 may include various types of connection, such as a wired communication link, a wireless communication link, an optical fiber cable, etc.

An audio signal made in a target space may be acquired by the array of microphones 104. The audio playing device 105 may play the audio signal acquired by the array of microphones.

A user may interact with the server 103 through the network 102 using a terminal device 101, to receive or send a message, etc. Various communication client applications, such as a multimedia application, a search application, a web browser application, a shopping application, an instant messaging tool, etc., may be installed in the terminal device 101.

The terminal device 101 may be various electronic devices, including but not limited to a mobile terminal such as a mobile phone, a laptop, a digital broadcast receiver, a personal digital assistant (PDA), a tablet, a portable multimedia player (PMP), an onboard terminal (such as an onboard navigation terminal), etc., as well as a fixed terminal such as a digital TV, a desktop computer, etc. The terminal device 101 may control a device for compensating speech communication (which enables to be the terminal device 101 itself, or another device connected to the terminal device 101) to perform speech communication compensation.

The server 103 may be a server providing various services, e.g., a background server that processes an audio signal uploaded by the terminal device 101. The background server may perform processing such as signal separation, sound zone determination, etc., on at least one raw audio signal received, to obtain a result of processing (such as an audio signal corresponding to an audio playing sound zone).

Note that the method for compensating speech communication according to embodiments of this disclosure may be implemented by the server 103 or by a terminal device 101. Accordingly, the apparatus for compensating speech communication may be provided in the server 103 or provided in a terminal device 101.

It should be understood that numbers of terminal devices 101, networks 102, servers 103, arrays of microphones 104, and audio playing devices 105 in FIG. 1 are merely illustrative. There may be any numbers of terminal devices 101, networks 102, servers 103, arrays of microphones 104, and audio playing devices 105 as needed. For example, in case no audio signal is to be processed remotely, the system architecture may include no network and no server, and include just the array of microphones, the terminal device, and the audio playing device.

In embodiments of this disclosure, the at least one communication participant may be located simultaneously in one target space, e.g., in car, in room, etc.; and the at least one communication participant may also include a near-end participant located in the target space and a far-end participant located at a far end.

### Illustrative method

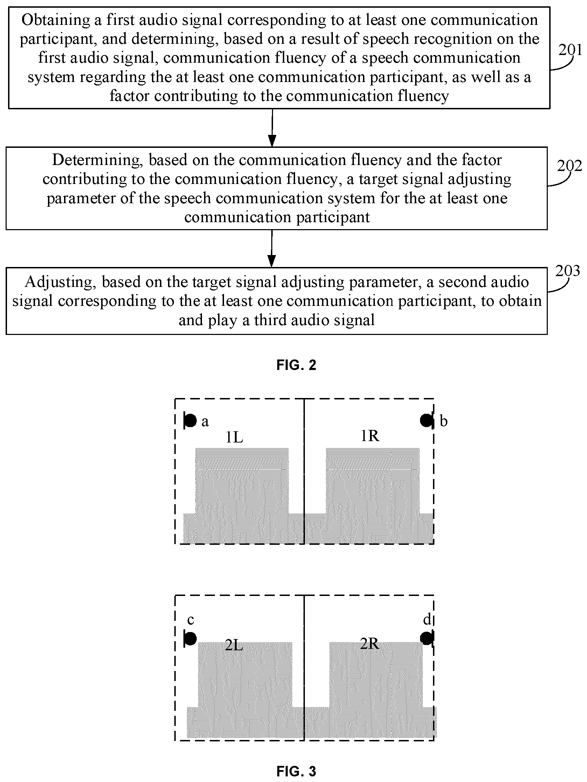

FIG. 2 is a flowchart of a method for compensating speech communication according to an illustrative embodiment of this disclosure. This embodiment is applicable to an electronic device (e.g., a terminal device 101 or the server 103 as shown in FIG. 1), and as shown in FIG. 2, the method includes steps as follows.

Step 201, Obtaining a first audio signal corresponding to at least one communication participant, and determining, based on a result of speech recognition on the first audio signal, communication fluency of a speech communication system regarding the at least one communication participant, as well as a factor contributing to the communication fluency

Wherein the first audio signal is an audio signal corresponding to the at least one communication participant in a current time period. The electronic device may obtain at least one raw audio signal acquired by a preset array of microphones (such as the array of microphones as shown in FIG. 1), and perform processing such as echo suppression, sound source separation, environmental noise suppression, and automatic gain control on the at least one raw audio signal, which enables to obtain the first audio signal corresponding to the at least one communication participant.

Wherein the array of microphones is configured for acquiring sound made in the target space, to obtain at least one raw audio signal, each raw audio signal of which corresponds to one microphone. Illustratively, as shown in FIG. 3, when the target space is space in a car, microphones a, b, c, and d may be provided respectively near the four seats, that is, the microphones a, b, c, and d acquire audio signals in four independent sound zones 1L, 1R, 2L, and 2R, respectively. Wherein the sound zones may be spaces where a driver' s seat, a passenger seat, and backseats on both sides are located respectively, as shown by 1L, 1R, 2L, and 2R in FIG. 3. The sound zones are respectively provided with a separate microphone and a separate speaker.

Specifically, the at least one raw audio signal may be processed respectively through different functional modules of an in-car communication system.

In some implementation, through an acoustic feedback module, adaptive acoustic feedback suppression may be performed on the at least one raw audio signal; using a reference signal, through adaptively fitted acoustic propagation path filtering, sound from the audio playing device and acquired by a microphone may be removed from the at least one raw audio signal, which thereby avoids forming acoustic feedback and generating howling or dragging sound phenomena in audio signal replay.

In some implementation, using a source separation module, the at least one raw audio signal may be separated. Wherein blind source separation refers to a process of restoring a respective independent component from a source signal without prior knowledge of parameters of the acquired source signal and a transmission channel. Blind source separation may be implemented using an existing algorithm, such as an independent component analysis (ICA) algorithm.

In some implementation, using a noise reduction module, a noise signal (including wind noise, tire noise, engine noise, knocking noise, etc.) in at least one separate audio signal may be canceled. Specifically, noise reduction processing is performed through an environmental noise suppression algorithm such as a conventional optimally-modified log-spectral amplitude (OM-LSA) algorithm, a neural network noise reduction (NN) algorithm, etc., to obtain a noise-reduced audio signal. The noise-reduced audio signal may be used as the first audio signal corresponding to the at least one communication participant.

In some implementation, volume gain processing may be performed on the noise-reduced audio signal through a volume gain module, such that an energy peak of the first audio signal approaches a preset requirement.

In the in car communication system, the at least one communication participant is generally part of passengers of the entire car, such as two or more than two passengers. In specific implementation, at least one communication participant currently communicating using the speech communication system may be provided through an interface of the in car communication system, or at least one communication participant currently communicating using the speech communication system may be provided through an in-car physical button.

Wherein speech recognition is performed on the obtained first audio signal corresponding to the at least one communication participant through an automatic speech recognition (ASR) algorithm or model, which enables to obtain a result of speech recognition. The communication fluency of the at least one communication participant is configured for indicating a degree of communication fluency of the at least one communication participant. The communication fluency may be described by a preset word, such as the communication fluency being excellent, average, or poor, or being high, medium, or low. The factor contributing to the communication fluency is configured for indicating a factor contributing to not fluent communication of the at least one communication participant, and may include, but is not limited to, at least one of: environmental noise, loudness, acoustic feedback, and sound source separation.

In embodiments of this disclosure, the communication fluency of the at least one communication participant may be determined based on a frequency of appearance of a fluency-indicative keyword in the result of speech recognition. For example, words capable of representing the communication fluency, such as "What did you say?", "Sorry, I didn't catch you", etc., appear in the result of speech recognition corresponding to the at least one communication participant for a number of times, which enables to determine that the communication fluency of the at least one communication participant is being not fluent.

Wherein the frequency of appearance of the fluency-indicative keyword is configured for indicating a number of appearances of the fluency-indicative keyword in a result of speech recognition corresponding to an audio signal per time unit. The communication fluency may be obtained by direct mapping based on the frequency of appearance of the fluency-indicative keyword. Illustratively, a frequency of appearance of the fluency-indicative keyword of 5 times or more may map to low communication fluency; a frequency of appearance of the fluency-indicative keyword of 2 to 4 times may map to medium communication fluency; and a frequency of appearance of the fluency-indicative keyword of 2 times or less may map to high communication fluency.

In some optional implementation, the factor contributing to the communication fluency may also be determined based on the fluency-indicative keyword in the result of speech recognition.

Illustratively, if a keyword such as "It's a bit noisy on your side" or "it's too noisy to hear clearly", etc., appears in the result of speech recognition, it may be determined that a current factor impacting the communication fluency is noise, corresponding to a to-be-adjusted signal adjusting parameter of a noise reduction coefficient; if a keyword such as "the sound is not loud enough on your side", "The sound is a bit low", etc., appears in the result of speech recognition, it may be determined that the current factor impacting the communication fluency is loudness, corresponding to a to-be-adjusted signal adjusting parameter of a volume gain; if a keyword such as "I hear an echo" appears in the result of speech recognition, it may be determined that the current factor impacting the communication fluency is acoustic feedback, corresponding to a to-be-adjusted signal adjusting parameter of an acoustic feedback control coefficient; and if a keyword such as "It seems that I can hear someone else" appears in the result of speech recognition, it may be determined that the current factor impacting the communication fluency is sound source separation, corresponding to a to-be-adjusted signal adjusting parameter of a sound source separation coefficient.

In some other optional implementation, there is no keyword in the result of speech recognition which enable to determine the factor contributing to the communication fluency, for example, just keywords such as "I can't hear clearly. Could you say it again?" appear in the result of speech recognition, based on which it may just be determined that the communication fluency is poor, but the factor contributing to the communication fluency cannot be directly determined. Then, any factor that may impact the communication fluency, such as any one or more of noise, volume, acoustic feedback, sound source separation, etc., may be determined as the factor contributing to the communication fluency, and a signal adjusting parameter corresponding to the factor contributing to the communication fluency may be dynamically adjusted.

In specific implementation, if there is no keyword in the result of speech recognition which enable to determine the factor contributing to the communication fluency, factors that may impact the communication fluency may be ranked according to respective frequencies and numbers of times the factors impact the communication fluency in historical communication, and then, a to-be-adjusted signal adjusting parameter which is to be adjusted this time may be determined based on the ranking.

Illustratively, factors contributing to communication fluency in multiple historical communications are counted, to obtain a ranking of factors that impact the communication fluency of: noise > volume > acoustic feedback > sound source separation. And this time there is no keyword in the result of speech recognition which enable to determine the factor contributing to the communication fluency. Then, it is preferred to set noise to be the factor that impacts the communication fluency, and then adjust the noise reduction coefficient; if feedback information of not fluent communication is again received after the noise reduction coefficient has been adjusted, it is possible to set volume to be the factor that impact the communication fluency, and then adjust the volume gain; if feedback information of not fluent communication is still received after the volume gain has been adjusted, it is possible to adjust the acoustic feedback control coefficient; and if feedback information of not fluent communication is still received after the acoustic feedback control coefficient has been adjusted, it is possible to adjust the sound source separation coefficient. In embodiments of this disclosure, the process of determining the communication fluency of the speech communication system regarding the at least one communication participant as well as the factor contributing to the communication fluency is a continuous process of dynamical determination based on audio signals acquired in respective time periods. Therefore, signal adjusting parameter adjustment is also a dynamic process, which is determined based on specific communication fluency, where the communication fluency may change with time and environment.

Step 202, Determining, based on the communication fluency and the factor contributing to the communication fluency, a target signal adjusting parameter of the speech communication system for the at least one communication participant

Wherein an amplitude in adjusting the signal adjusting parameter of the speech communication system for the at least one communication participant may be determined based on the determined communication fluency; and a type of a to-be-adjusted signal adjusting parameter in the speech communication system may be determined based on the factor contributing to the communication fluency.

Specifically, the communication fluency is configured for indicating a degree of communication fluency of the speech communication system regarding a respective communication participant. The communication fluency may be described by a preset word, such as the communication fluency being excellent, average, or poor, or being high, medium, or low.

In embodiments of this disclosure, there is a mapping between communication fluency and an amplitude in adjusting a signal adjusting parameter. If the communication fluency is average, the signal adjusting parameter may be adjusted by a small amplitude; and if the communication fluency is poor, the signal adjusting parameter may be adjusted by a large amplitude.

Specifically, in an embodiment of this disclosure, the mapping between communication fluency and an amplitude in adjusting a signal adjusting parameter may be provided in advance in the device for performing speech communication compensation, such as a terminal device 101 or the server 103 in FIG. 1. The mapping may be learned based on massive parameter adjustment empirical data. For example, when the factor contributing to the communication fluency is noise, if the communication fluency is poor, a corresponding amplitude in adjusting the noise reduction coefficient is 0.3; if the communication fluency is average, a corresponding amplitude in adjusting the noise reduction coefficient is 0.2; and if the communication fluency is good, a corresponding amplitude in adjusting the noise reduction coefficient is 0. As another example, when the factor contributing to the communication fluency is sound source separation, if the communication fluency is poor, a corresponding amplitude in adjusting the sound source separation coefficient is 0.4; if the communication fluency is average, a corresponding amplitude in adjusting the sound source separation coefficient is 0.3; and if the communication fluency is good, a corresponding amplitude in adjusting the sound source separation coefficient is 0. When the factor contributing to the communication fluency is acoustic feedback, if the communication fluency is poor (loud echo), a corresponding amplitude in adjusting the acoustic feedback control coefficient is 0.3; if the communication fluency is average, a corresponding amplitude in adjusting the acoustic feedback control coefficient is 0.2; and if the communication fluency is good, a corresponding amplitude in adjusting the acoustic feedback control coefficient is 0. When the factor contributing to the communication fluency is volume, if the communication fluency is poor, the volume gain may be increased by 5 dB; and if the communication fluency is average (volume being a bit low), the volume gain may be increased by 2 dB.

In this embodiment, the signal adjusting parameter includes but is not limited to: a source acoustic feedback control coefficient, a source sound source separation coefficient, a source volume gain, and a source noise reduction coefficient. The source acoustic feedback control coefficient is an acoustic feedback control coefficient g1 before the adjustment, the source sound source separation coefficient is a sound source separation coefficient g2 before the adjustment, the source volume gain is a volume gain before the adjustment, and the source noise reduction coefficient is a noise reduction coefficient g3 before the adjustment.

Wherein the acoustic feedback control coefficient is configured for indicating a control coefficient of the acoustic feedback module. The value of the acoustic feedback control coefficient g1 ranges from 0 to 1, where the closer the coefficient is to 0, the greater the suppression, and the greater the sound distortion; while the closer the coefficient is to 1, the less the suppression, and the less the sound distortion.

In some optional implementation, the acoustic feedback module may implement adaptive acoustic feedback suppression by weighting g1 *mic signal and (1-g1)*acoustic feedback output signal with a sum of the weights being 1. In some optional implementation, the acoustic feedback module may also implement adaptive acoustic feedback suppression by adjusting a step size or a forgetting coefficient of an adaptive filtering algorithm (normalized least mean square, NLMS, and recursive least squares, RLS) (where the step size and the forgetting coefficient are mapped to 0-1 by certain linear conversion).

Wherein the sound source separation coefficient g2 is configured for indicating a coefficient for separating the at least one raw audio signal by the source separation module. The source separation module may adjust a degree of voice isolation through the sound source separation coefficient. Wherein the value of the sound source separation coefficient ranges from 0 to 1. The closer the coefficient is to 0, the greater the degree of isolation, and the greater the sound distortion; while the closer the coefficient is to 1, the less the degree of isolation, and the less the sound distortion.

In some optional implementation, the source separation module may implement sound source separation by weighting g2* acoustic feedback output signal and (1-g1)* separation output signal with a sum of the weights being 1.

Wherein the volume gain is configured for indicating a parameter for adjusting audio signal energy by the volume gain module.

In some optional implementation, the volume gain may be a decibel (dB) value set in advance. An audio signal is increased by the decibel set in advance and subjected to clipping protection, which enables to adjust the volume gain. In some other optional implementation, the volume gain may also be a multiple set in advance. The audio signal is normalized to [-1, 1], multiplied by the multiple set in advance, and subjected to clipping protection, which enables to adjust the volume gain.

Wherein the noise reduction coefficient g3 is configured for indicating a coefficient for canceling a noise signal (wind noise, tire noise, engine noise, as well as knocking noise) in an audio signal by the noise reduction module. Wherein the coefficient value of the noise reduction coefficient ranges from 0 to 1. The closer the coefficient is to 0, the greater the noise suppression, and the greater the sound distortion; while the closer the coefficient is to 1, the less the noise suppression, and the less the sound distortion.

In some optional implementation, the noise reduction module may implement noise reduction by weighting g3 * audio signal before noise reduction and (1-g3)* noise-reduced audio signal with a sum of the weights being 1.

After the communication fluency of the at least one communication participant and the factor contributing to the communication fluency have been determined based on the result of speech recognition on the first audio signal, a to-be-adjusted signal adjusting parameter may be determined based on the factor contributing to the communication fluency, which is at least one of the source acoustic feedback control coefficient, the source sound source separation coefficient, the source volume gain, and the source noise reduction coefficient. A determined to-be-adjusted signal adjusting parameter is increased or decreased based on the communication fluency, which enables to obtain the target signal adjusting parameter.

For another signal adjusting parameter which does not impact the communication fluency, a source signal adjusting parameter is still used in subsequent audio signal processing.

Illustratively, when it is determined that the factor contributing to the communication fluency is environmental noise and loudness, the source volume gain and the source noise reduction coefficient are adjusted respectively corresponding to the communication fluency, to obtain a target volume gain and a target noise reduction coefficient. A parameter (the acoustic feedback control coefficient and the sound source separation coefficient) which is not the factor contributing to the communication fluency in a current environment is not adjusted this time, and the source acoustic feedback control coefficient and the source sound source separation coefficient are still used for acoustic feedback control and sound source separation processing in subsequent audio signal processing.

Step 203, Adjusting, based on the target signal adjusting parameter, a second audio signal corresponding to the at least one communication participant, to obtain and play a third audio signal

Wherein the second audio signal is an audio signal which is obtained regarding the at least one communication participant and is subsequent to the first audio signal in a time sequence. Illustratively, the first audio signal is an audio signal acquired regarding the at least one communication participant at time t, and the second audio signal may be an audio signal acquired regarding the at least one communication participant at time t+1.

In embodiments of this disclosure, after the second audio signal has been acquired, processing such as echo suppression, sound source separation, environmental noise suppression, and automatic gain control as described may be performed on the second audio signal based on the target signal adjusting parameter which has been adjusted, to obtain the corresponding third audio signal.

Through steps 201 to 203, for a speech communication system, a first audio signal corresponding to at least one communication participant is obtained, and communication fluency of the speech communication system regarding the at least one communication participant, as well as a factor contributing to the communication fluency, are determined based on a result of speech recognition on the first audio signal; then, a target signal adjusting parameter of the speech communication system for the at least one communication participant may be determined based on the communication fluency and the factor contributing to the communication fluency. With a technical solution according to this disclosure, a parameter for adjusting an audio signal corresponding to a communication participant may be adjusted adaptively, which improves the communication fluency between at least one communication participant in the speech communication system. In addition, a target signal adjusting parameter is determined based on a factor contributing to the communication fluency, which implements targeted adjustment of a signal adjusting parameter of the speech communication system, which thereby helps improve efficiency of audio signal adjustment, and reduce memory consumption by the speech communication system in audio signal adjustment.

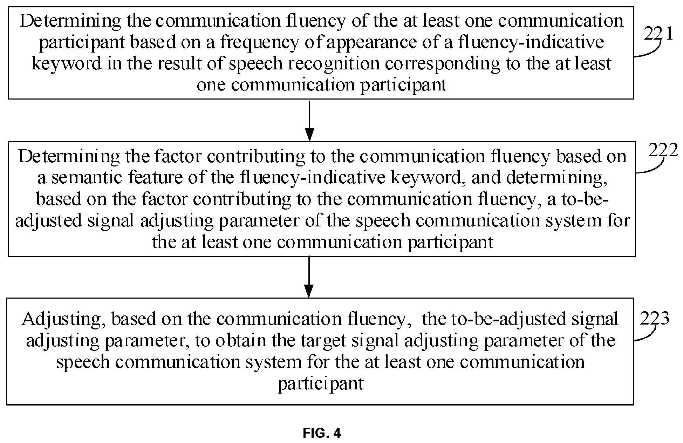

FIG. 4 is a flowchart of determining a target signal adjusting parameter in a method for compensating speech communication according to an illustrative embodiment of this disclosure. As shown in FIG. 4, based on the embodiment shown in FIG. 2, step 202 may include step 221 to step 223. The steps are described as follows.

Step 221, Determining the communication fluency of the at least one communication participant based on a frequency of appearance of a fluency-indicative keyword in the result of speech recognition corresponding to the at least one communication participant

Wherein the fluency-indicative keyword is configured for indicating a keyword capable of representing the communication fluency, such as "the sound is not loud enough", "a bit noisy", or "there is noise", etc. The frequency of appearance of the fluency-indicative keyword is configured for indicating a number of appearances of the fluency-indicative keyword in a result of speech recognition corresponding to an audio signal per time unit, and the communication fluency may be obtained by direct mapping based on the frequency of appearance of the fluency-indicative keyword. The source acoustic feedback control coefficient is an acoustic feedback control coefficient g1 before the adjustment, the source sound source separation coefficient is a sound source separation coefficient g2 before the adjustment, the source volume gain is a volume gain before the adjustment, and the source noise reduction coefficient is a noise reduction coefficient g3 before the adjustment.

In embodiments of this disclosure, when the result of speech recognition includes the fluency-indicative keyword, the frequency of appearance of the fluency-indicative keyword may further be determined based on the result of speech recognition. For example, a frequency of appearance of the fluency-indicative keyword of 5 times or more may map to low communication fluency; a frequency of appearance of the fluency-indicative keyword of 2 to 4 times or more may map to medium communication fluency, and a frequency of appearance of the fluency-indicative keyword of 0 time may map to high communication fluency.

Step 222, Determining the factor contributing to the communication fluency based on a semantic feature of the fluency-indicative keyword, and determining, based on the factor contributing to the communication fluency, a to-be-adjusted signal adjusting parameter of the speech communication system for the at least one communication participant

Wherein the to-be-adjusted signal adjusting parameter includes at least one of: a source acoustic feedback control coefficient, a source sound source separation coefficient, a source volume gain, and a source noise reduction coefficient.

Wherein the semantic feature of the fluency-indicative keyword refers to some semantic characteristics or attributes of the fluency-indicative keyword, for describing meaning and significance of the word at a semantic level, and then determining the fluency-indicative keyword corresponding to the semantic feature. For example, the fluency-indicative keyword "the sound is not loud enough" describes a low-energy audio signal, the factor contributing to the communication fluency is low volume, corresponding to a to-be-adjusted signal adjusting parameter of the source volume gain.

Step 223, Adjusting, based on the communication fluency, the to-be-adjusted signal adjusting parameter, to obtain the target signal adjusting parameter of the speech communication system for the at least one communication participant

Wherein the respective communication fluency is configured for indicating a degree of communication fluency of the speech communication system regarding a respective communication participant. The communication fluency may be described by a preset word, such as the communication fluency being excellent, average, or poor, or being high, medium, or low.

In embodiments of this disclosure, there is an association between communication fluency and an amplitude in adjusting a signal adjusting parameter. If the communication fluency is average, the signal adjusting parameter may be adjusted by a small amplitude; and if the communication fluency is poor, the signal adjusting parameter may be adjusted by a large amplitude.

Illustratively, currently, according to the factor contributing to the communication fluency, a to-be-adjusted signal adjusting parameter is determined to be the source volume gain, where the source volume gain is 5 dB; and the communication fluency is poor (volume being too low), indicating that the source volume gain is to be adjusted by a large amplitude. Then, the source volume gain may be increased by 5 dB, to obtain a target volume gain of 10 dB; and if the communication fluency is average (volume being a bit low), it indicates that the source volume gain is to be adjusted by a large amplitude. Then, the source volume gain may be increased by 2 dB, to obtain a target volume gain of 7 dB.

In some optional implementation, there may be one or more to-be-adjusted signal adjusting parameters, which may be determined specifically according to a communication fluency-indicative keyword in the result of speech recognition. For example, to-be-adjusted signal adjusting parameters are the source volume gain and the source noise reduction coefficient.

When different signal adjusting parameters are to be adjusted, amplitudes in adjusting the signal adjusting parameters may be determined respectively according to the communication fluency and a frequency of appearance of a communication fluency-indicative keyword. Specifically, the amplitudes in adjusting the signal adjusting parameters may be determined based on a large amount of experimental data.

In embodiments of this disclosure, this embodiment may be implemented by a parameter adjusting model. The parameter adjusting model is an artificial intelligence model trained in advance, which is a software module configured for adjusting and processing a signal adjusting parameter. Through the parameter adjusting model, the electronic device is enabled to determine the communication fluency of the speech communication system for the at least one communication participant based on the result of speech recognition, and adjust an audio signal adjusting parameter, to output a target signal adjusting parameter.

Specifically, a model prompting word may be generated based on the result of speech recognition, wherein the model prompting word is configured for directing the parameter adjusting model to complete parameter adjustment; and then, the target signal adjusting parameter of the speech communication system may be generated using the parameter adjusting model and based on the model prompting word.

Wherein the model prompting word includes but is not limited to at least one of: a task instruction, a source signal adjusting parameter for the at least one communication participant, the result of speech recognition corresponding to the at least one communication participant, a model output parameter, and a format of the model output parameter. The task instruction is configured for indicating a text or instruction that directs the parameter adjusting model to generate a specific output (the target signal adjusting parameter and the communication fluency). The source signal adjusting parameter for the at least one communication participant includes the source acoustic feedback control coefficient, the source sound source separation coefficient, the source volume gain, and the source noise reduction coefficient. The model output parameter includes but is not limited to at least one of: the communication fluency of the at least one communication participant, the factor contributing to the communication fluency, and the target signal adjusting parameter.

Illustratively, the model prompting word is illustrated as follows:
"task instruction: you are an intelligent ICC adjustment assistant, responsible for determining a method for adjusting an ICC parameter according to a conversation of an in-car user.

Adjustable ICC parameters include:
(1) the acoustic feedback control coefficient, where the coefficient value ranges from 0 to 1; the closer the coefficient is to 0, the greater the suppression, and the greater the sound distortion; while the closer the coefficient is to 1, the less the suppression, and the less the sound distortion;
(2) the sound source separation coefficient, where the coefficient value ranges from 0 to 1; the closer the coefficient is to 0, the greater the degree of isolation, and the greater the sound distortion; while the closer the coefficient is to 1, the less the degree of isolation, and the less the sound distortion;
(3) the volume gain, where energy of a played signal is increased by a set db; and
(4) the noise reduction coefficient, where the coefficient value ranges from 0 to 1. The closer the coefficient is to 0, the greater the noise suppression, and the greater the sound distortion; while the closer the coefficient is to 1, the less the noise suppression, and the less the sound distortion.

Content of the conversation of the in-car user:

```
 Driver: xxx
 Left back seat: xxx
 Driver: xxx
 ...
 Current ICC parameters:
 {
 "Acoustic feedback control coefficient": "xx",
 "Sound source separation coefficient": "xx",
 "Volume gain": "xx",
 "Noise reduction coefficient": "xx"
 }
 Please stick to an output format of:
 {
 "Current passenger communication fluency": "".
 "Reason for being not fluent": "",
 "Adjusted ICC parameter": {
 "Target acoustic feedback control coefficient": "xx",
 "Target sound source separation coefficient": "xx",
 "Target volume gain": "xx",
 "Target noise reduction coefficient": "xx"
 }
 Illustratively, model output parameters of the parameter adjusting model are:
 {
 "Current passenger communication fluency": "not fluent",
 "Reason for being not fluent": "noisy environment",
 "Adjusted ICC parameter": {
 "Control coefficient of the acoustic feedback module": "0.8",
 "Source separation module coefficient": "0.6",
 "Sound increment": "1 db",
 "Noise reduction module coefficient": "0.7"
 }
```

Through the step 221 to step 223, the communication fluency of the at least one communication participant is determined based on a frequency of appearance of a fluency-indicative keyword in the result of speech recognition corresponding to the at least one communication participant; then, the factor contributing to the communication fluency is determined based on a semantic feature of the fluency-indicative keyword, and a to-be-adjusted signal adjusting parameter of the speech communication system for the at least one communication participant is determined based on the factor contributing to the communication fluency, and finally, the to-be-adjusted signal adjusting parameter is adjusted based on the communication fluency, to obtain the target signal adjusting parameter of the speech communication system for the at least one communication participant, which thereby enables to automatically adjust and control a signal adjusting parameter of the speech communication system based on the result of speech recognition by the speech communication system corresponding to the at least one communication participant, which ensures enabling dynamic audio signal adjustment in different environments and scenes, improving the communication fluency with the speech communication system.

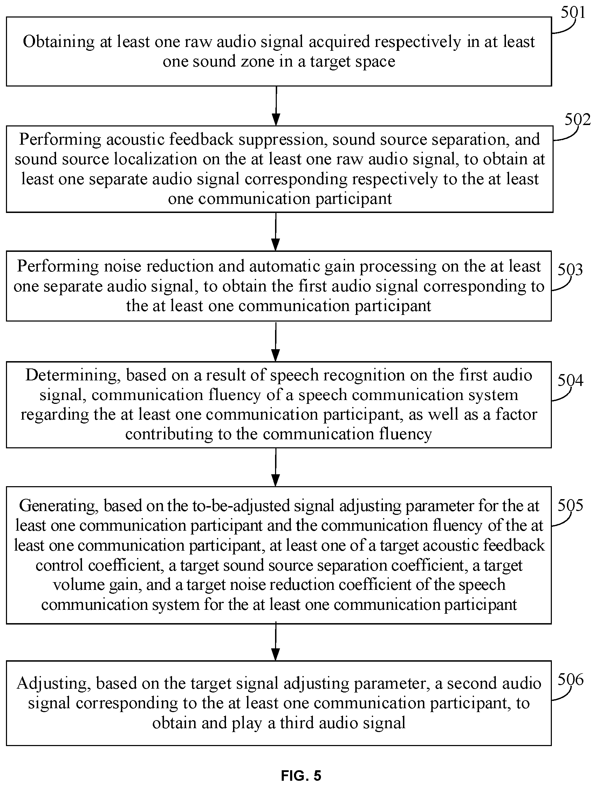

In some scenes, the at least one communication participant may be located in the same target space. For example, passengers located in the same car communicate with each other. For a process of compensating speech communication in the same target space, one may refer to FIG. 5, which includes step 501 to step 506. The steps are described as follows.

Step 501, Obtaining at least one raw audio signal acquired respectively in at least one sound zone in a target space

Wherein the target space may be various spaces, e.g., in-car space, in room space, etc. The at least one sound zone may be a plurality of zones obtained by artificially dividing the target space. For example, when a target sound zone is an in-car space, the at least one sound zone may be spaces where a driver' s seat, a passenger seat, and backseats on both sides are respectively located. As shown in FIG. 3, the spaces where the four seats are located may be divided respectively into corresponding sound zones, including 1L, 1R, 2L, and 2R.

Step 502, Performing acoustic feedback suppression, sound source separation, and sound source localization on the at least one raw audio signal, to obtain at least one separate audio signal corresponding respectively to the at least one communication participant

Wherein the acoustic feedback suppression is configured for indicating to remove sound played by the audio playing device and acquired by a microphone from the at least one raw audio signal, which thereby avoids forming acoustic feedback and generating howling or dragging sound phenomena in acoustic replay. Sound source separation is configured for indicating to separate the at least one raw audio signal. Sound source localization is configured for determining at least one sound zone corresponding respectively to the at least one separate audio signal. Specifically, the at least one separate audio signal may not be in one-to-one correspondence with actual sound zones. Therefore, the at least one separate audio signal is to be matched to the at least one raw audio signal (or at least one audio signal obtained by the above preprocessing operation), thereby to determine an sound zone corresponding to each of the at least one separate audio signal.

As an example, the similarity between a pair of a separate audio signal and an raw audio signal (or an audio signal obtained by the above preprocessing operation) may be determined. For each of the at least one separate audio signal, an raw audio signal corresponding to maximum similarity with said separate audio signal may be determined. An sound zone corresponding to said separate audio signal may be determined based on a microphone corresponding to the determined raw audio signal.

Step 503, Performing noise reduction and automatic gain processing on the at least one separate audio signal, to obtain the first audio signal corresponding to the at least one communication participant

Wherein noise reduction is configured for indicating to cancel a noise signal (including wind noise, tire noise, engine noise, knocking noise, etc.) in the at least one separate audio signal. Specifically, noise reduction processing is performed through an environmental noise suppression algorithm such as an optimally-modified log-spectral amplitude (OM-LSA) algorithm, a neural network noise reduction (NN) algorithm, etc., to obtain a noise-reduced audio signal. The noise-reduced audio signal may be used as the first audio signal corresponding to the at least one communication participant. In addition, volume gain processing may also be performed on the noise-reduced audio signal through a volume gain module, such that an energy peak of the first audio signal approaches a preset requirement.

Step 504, Determining, based on a result of speech recognition on the first audio signal, communication fluency of a speech communication system regarding the at least one communication participant, as well as a factor contributing to the communication fluency

Wherein for implementation of step 504, one may refer to the description of step 201 in the embodiment shown in FIG. 2, which is not repeated here.

Step 505, Generating, based on the to-be-adjusted signal adjusting parameter for the at least one communication participant and the communication fluency of the at least one communication participant, at least one of a target acoustic feedback control coefficient, a target sound source separation coefficient, a target volume gain, and a target noise reduction coefficient of the speech communication system for the at least one communication participant

Wherein signal adjusting parameters of the speech communication system for different communication participants may differ. For example, for two communication participants located in sound zone 1 and sound zone 2 in the car, as noise in different sound zones in car may differ, the noise reduction coefficient may differ accordingly for audio signals acquired in different sound zones. Moreover, as loudness of sound of the two communication participants may differ, the corresponding volume gains may differ. Therefore, communication fluency of different communication participants in the speech communication system, and to-be-adjusted signal adjusting parameters for the different communication participants, may be determined respectively according to results of speech recognition corresponding to the different communication participants. Then, at least one of the target acoustic feedback control coefficient, the target sound source separation coefficient, the target volume gain, and the target noise reduction coefficient of the speech communication system for a respective communication participant may be generated.

In embodiments of this disclosure, target signal adjusting parameters for different communication participants may be generated using a parameter adjusting model.

Illustratively, model output parameters of the parameter adjusting model are:

```
 {
 "Current communication fluency of passenger 1": "not fluent",
 "Reason for being not fluent": "noisy environment",
 "Adjusted ICC parameter": {
 "Control coefficient of the acoustic feedback module": "0.8",
 "Source separation module coefficient": "0.6",
 "Sound increment": "1 db",
 "Noise reduction module coefficient": "0.7"}
  
 "Current communication fluency of passenger 2": "not fluent",
 "Reason for being not fluent": "low volume",
 "Adjusted ICC parameter": {
 "Control coefficient of the acoustic feedback module": "0.8",
 "Source separation module coefficient": "0.6",
 "Sound increment": "3 db",
 "Noise reduction module coefficient": "0.6"
 
 }
```

Step 506, Adjusting, based on the target signal adjusting parameter, a second audio signal corresponding to the at least one communication participant, to obtain and play a third audio signal

Wherein the second audio signal is an audio signal which is obtained regarding the at least one communication participant and is subsequent to the first audio signal in a time sequence.

In embodiments of this disclosure, the second audio signal corresponding to the at least one communication participant may be adjusted based on one of a target acoustic feedback control coefficient, a target sound source separation coefficient, a target volume gain, and a target noise reduction coefficient, to obtain the third audio signal.

Specifically, a corresponding functional module may be used. For example, using the acoustic feedback module, adaptive acoustic feedback suppression may be performed on the second audio signal based on the target acoustic feedback control coefficient. Using the source separation module, a respective independent component may be restored from a source signal based on the target sound source separation coefficient. Using the noise reduction module, a noise signal in the at least one separate audio signal is canceled based on the target noise reduction coefficient, to obtain a noise-reduced audio signal. Using the volume gain module, volume gain processing is performed on the noise-reduced audio signal based on the target volume gain, such that an energy peak of the first audio signal approaches a preset requirement.

For specific implementation of step 506, one may refer to the description of step 203 in the embodiment shown in FIG. 2, which is not repeated here.

Through the step 501 to step 506, implementation of respectively adjusting signal adjusting parameters for different communication participants located in the target space is disclosed. This helps respectively adjust and control the signal adjusting parameters of the speech communication system for different communication participants based on results of speech recognition by the speech communication system corresponding to the communication participants, which ensures improving communication fluency between the different communication participants in the speech communication system.

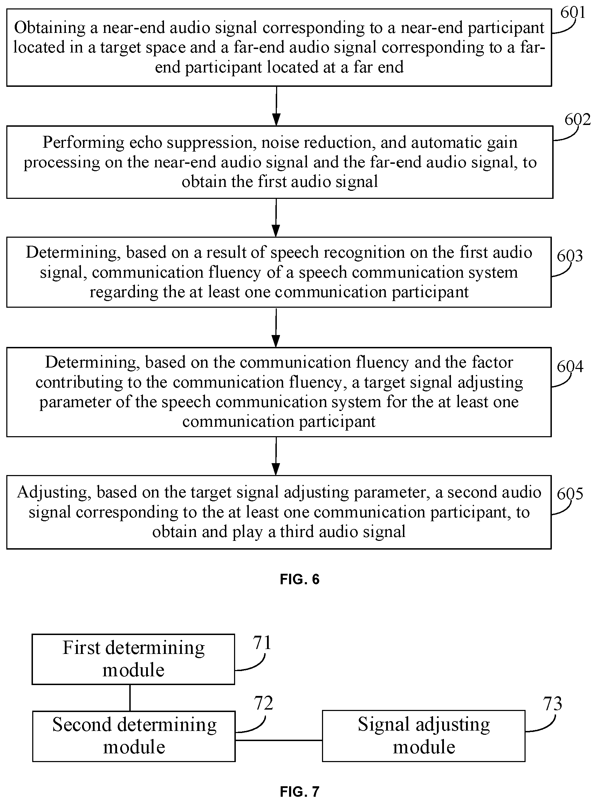

In some other implementation, the at least one communication participant may include a near-end participant located in the target space and a far-end participant located at a far end, for example, in a scene where an in-car user 1 communicates by phone with a user 2 located at the far end. For a process of compensating speech communication between a near-end participant located in the target space and a far-end participant located at a far end, one may refer to FIG. 6, which includes step 601 to step 605. The steps are described as follows.

Step 601, Obtaining a near-end audio signal corresponding to a near-end participant located in a target space and a far-end audio signal corresponding to a far-end participant located at a far end

In this implementation, the far-end audio signal and the near-end audio signal may be obtained through existing related art. If a software algorithm (such as the parameter adjusting model) configured for automatically adjusting the signal adjusting parameter for the at least one communication participant is deployed at the near end, the near-end audio signal may be acquired directly through a near-end microphone; and the far-end audio signal may be acquired by a far-end microphone, and then transmitted to the near end through network communication.

Step 602, Performing echo suppression, noise reduction, and automatic gain processing on the near-end audio signal and the far-end audio signal, to obtain the first audio signal

Wherein echo suppression, noise reduction, and automatic gain processing may be performed respectively on the near-end audio signal and the far-end audio signal independently at both ends of the communication.

Step 603, Determining, based on a result of speech recognition on the first audio signal, communication fluency of a speech communication system regarding the at least one communication participant

In embodiments of this disclosure, the communication fluency of the speech communication system regarding the at least one communication participant may be determined respectively based on results of speech recognition on the audio signals corresponding to the communication participants at both ends of the communication.

Step 604, Determining, based on the communication fluency and the factor contributing to the communication fluency, a target signal adjusting parameter of the speech communication system for the at least one communication participant

In step 603 and step 604, the results of speech recognition on the audio signals corresponding to the communication participants at both ends of the communication may be input respectively to the parameter adjusting model mentioned in the embodiment shown in FIG. 4, to correspondingly obtain the communication fluency of the at least one communication participant and the factor contributing to the communication fluency.

Step 605, Adjusting, based on the target signal adjusting parameter, a second audio signal corresponding to the at least one communication participant, to obtain and play a third audio signal

In implementation of this disclosure, if the software algorithm (such as the parameter adjusting model) configured for automatically adjusting the signal adjusting parameter for the at least one communication participant is deployed at the near end, having automatically adjusted the audio signal, a near-end device may send the target signal adjusting parameter which has been adjusted to a far-end device, such that the far-end device adjusts the audio signal based on the target signal adjusting parameter which has been adjusted.

Wherein the second audio signal is an audio signal which is obtained regarding the at least one communication participant and is subsequent to the first audio signal in a time sequence.

Wherein for specific implementation of step 603 to step 605, one may refer to the description of step 201 to step 203 in the embodiment shown in FIG. 2, which is not repeated here.

Through the step 601 to step 605, implementation of respectively adjusting signal adjusting parameters, for communication participants located at the near end and a far end that communicate through a network, is disclosed. Therefore, the technical solution according to this disclosure is also applicable to a scene of communication between two communication participants located at the near end and a far end, ensuring that communication participants communicating by phone or Bluetooth are also enabled to communicate fluently.

In some other optional implementation, in case there is a deaf and or mute person in the at least one communication participant who communicates using the speech communication system, the speech communication system may send a result of recognition to a screen device in a respective sound zone in the target space for real-time display; or, text information input by the deaf and or mute person through the screen device may be converted into audio information, which is played in an sound zone where a communication participant is located in the target space.

In some other optional implementation, when a communication participant expresses a request to repeat a previous audio signal, such as "Didn't hear clearly. Say it again", text information corresponding to the audio signal requested by the communication participant to repeat is obtained, and an audio signal to be replayed is generated using a text-to-speech conversion model based on the text information corresponding to the audio signal requested to be played. The audio signal to be played includes the audio signal requested by the communication participant to repeat. The audio signal to be replayed is played through a target audio player in an sound zone where the communication participant requesting the repeat is located.

Specifically, in generating the audio signal to be replayed, the text information corresponding to the audio signal requested to be repeated may be adjusted; and then, the audio signal to be replayed is generated using the text-to-speech conversion model based on the adjusted text information. The audio signal to be replayed may represent that the audio signal to be replayed is a replay audio.

Illustratively, information enabling to represent that the audio signal to be replayed is a replay audio, such as "She said" or "He just said", may be added before the text information corresponding to the audio signal requested by the communication participant to play.

In this implementation, the speech communication system implements a function of a communication messenger assistant, and may replay an audio signal requested by a communication participant to repeat in an sound zone where the communication participant is located when the communication participant does not communicates fluently, exempting the other communication participant from repeat, which helps accelerate a response speed and improve user interaction fluency.

### Illustrative apparatus

FIG. 7 is a diagram of a structure of an apparatus for compensating speech communication according to an illustrative embodiment of this disclosure. As shown in FIG. 7, the apparatus may include:
a first determining module 71, configured for obtaining a first audio signal corresponding to at least one communication participant, and determining, based on a result of speech recognition on the first audio signal, communication fluency of a speech communication system regarding the at least one communication participant, as well as a factor contributing to the communication fluency;
a second determining module 72, configured for determining, based on the communication fluency and the factor contributing to the communication fluency, a target signal adjusting parameter of the speech communication system for the at least one communication participant; and
a signal adjusting module 73, configured for adjusting, based on the target signal adjusting parameter, a second audio signal corresponding to the at least one communication participant, to obtain and play a third audio signal, wherein the second audio signal is an audio signal which is obtained regarding the at least one communication participant and is subsequent to the first audio signal in a time sequence.

In this embodiment, the first determining module 71 may be divided into a processing module and an audio acquiring module. The audio acquiring module may be a device enabling to acquire an audio signal such as a microphone. The processing module may include software or an algorithm enabling to process the audio signal acquired by the microphone.

The signal adjusting module 73 may be divided into a processing module and an audio playing device. The audio playing module may be any form of audio playing sensor such as electronic audio, a loudspeaker, a reverberator, etc., applicable to this embodiment as long as it enables to play an audio signal. The processing module may include software or an algorithm enabling to process the audio signal acquired by the microphone.

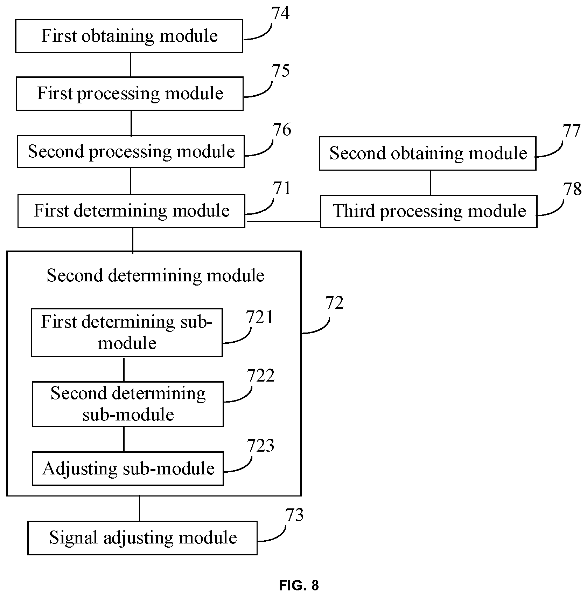

FIG. 8 is a diagram of a structure of an apparatus for compensating speech communication according to another illustrative embodiment of this disclosure. As shown in FIG. 8, based on the embodiment shown in FIG. 7, the second determining module 72 includes:
a first determining sub-module 721, configured for determining the communication fluency of the at least one communication participant based on a frequency of appearance of a fluency-indicative keyword in the result of speech recognition corresponding to the at least one communication participant;
a second determining sub-module 722, configured for determining the factor contributing to the communication fluency based on a semantic feature of the fluency-indicative keyword, and determining, based on the factor contributing to the communication fluency, a to-be-adjusted signal adjusting parameter of the speech communication system for the at least one communication participant, wherein the to-be-adjusted signal adjusting parameter includes at least one of: a source acoustic feedback control coefficient, a source sound source separation coefficient, a source volume gain, and a source noise reduction coefficient; and
an adjusting sub-module 723, configured for adjusting, based on the communication fluency, the to-be-adjusted signal adjusting parameter, to obtain the target signal adjusting parameter of the speech communication system for the at least one communication participant.

In some implementation of this disclosure, in response to that the at least one communication participant is located in the target space, the apparatus further includes:
a first obtaining module 74, configured for obtaining at least one raw audio signal acquired respectively in at least one sound zone in a target space;
a first processing module 75, configured for performing acoustic feedback suppression, sound source separation, and sound source localization on the at least one raw audio signal, to obtain at least one separate audio signal corresponding respectively to the at least one communication participant; and
a second processing module 76, configured for performing noise reduction and automatic gain processing on the at least one separate audio signal, to obtain the first audio signal corresponding to the at least one communication participant.

In some implementation of this disclosure, the second determining module 72 is specifically configured for generating, based on the to-be-adjusted signal adjusting parameter for the at least one communication participant and the communication fluency of the at least one communication participant, at least one of a target acoustic feedback control coefficient, a target sound source separation coefficient, a target volume gain, and a target noise reduction coefficient of the speech communication system for the at least one communication participant.

In some implementation of this disclosure, in response to the at least one communication participant including a near-end participant located in a target space and a far-end participant located at a far end, the apparatus further includes:
a second obtaining module 77, configured for obtaining a near-end audio signal corresponding to a near-end participant located in a target space and a far-end audio signal corresponding to a far-end participant located at a far end; and
a third processing module 78, configured for performing echo suppression, noise reduction, and automatic gain processing on the near-end audio signal and the far-end audio signal, to obtain the first audio signal.

In some implementation of this disclosure, the signal adjusting module 73 is configured for adjusting the second audio signal corresponding to the at least one communication participant based on one of a target acoustic feedback control coefficient, a target sound source separation coefficient, a target volume gain, and a target noise reduction coefficient, to obtain the third audio signal.

Note that modules in the apparatus may be divided and / or recombined, wherein the division and / or recombination should be deemed as equivalent solutions for the apparatus.

Illustrative embodiments of the apparatus correspond to the "Illustrative method" section, with related content thereto mutually referable and citable. For beneficial technical effects corresponding to the illustrative embodiments of the apparatus, one may refer to respective beneficial technical effects of the "Illustrative method" section, which are not repeated here.

### Illustrative electronic device

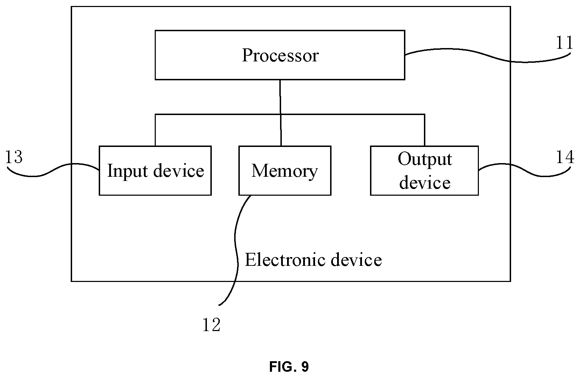

FIG. 9 is a diagram of a structure of an electronic device according to embodiments of this disclosure, including at least one processor 11 and a memory 12.

The processor 11 may be a central processing unit (CPU) or another form of processing unit having a data processing capability and/or an instruction execution capability, and may control other components in the electronic device 10 to implement desired functions.

The memory 12 may include one or more computer program products, which may include various forms of computer readable storage media, such as a volatile memory and/or a non-volatile memory. The volatile memory may include, for example, random access memory (RAM) and/or cache. The nonvolatile memory may include, for example, read-only memory (ROM), hard disk, and flash memory. One or more computer program instructions may be stored on the computer readable storage medium. The processor 11 may execute the one or more computer program instructions to implement the method according to the various embodiments of this disclosure that are described above and/or other desired functions.

In an example, the electronic device may further include an input device 13 and an output device 14. These components are connected to each other through a bus system and/or another form of connection mechanism (not shown).

The input device13 may also include, for example, a keyboard, a mouse, a touch screen, a pickup device (such as an array of microphones), etc.

The output device 14 may output various information to the outside, and may include, for example, a display, a speaker, a printer, a communication network, and a remote output device connected to the communication network.

Of course, for simplicity, FIG. 9 shows only some of components in the electronic device that are related to this disclosure, and components such as a bus and an input/output interface are omitted. In addition, according to specific application situations, the electronic device may further include any other appropriate components.

### Illustrative system, computer program product, and computer-readable storage medium

In addition to the methods and devices, embodiments of this disclosure may also relate to a system for compensating speech communication, which includes at least one microphone, a processing unit, and a device for compensating speech communication.

The at least one microphone is configured for obtaining a first audio signal corresponding to at least one communication participant, the processing unit is configured for determining, based on a result of speech recognition on the first audio signal, communication fluency of a speech communication system regarding the at least one communication participant, as well as a factor contributing to the communication fluency, and determining, based on the communication fluency and the factor contributing to the communication fluency, a target signal adjusting parameter of the speech communication system for the at least one communication participant; and the device for compensating speech communication is configured for adjusting, based on the target signal adjusting parameter, a second audio signal corresponding to the at least one communication participant, to obtain and play a third audio signal, wherein the second audio signal is an audio signal which is obtained regarding the at least one communication participant and is subsequent to the first audio signal in a time sequence.

In some optional implementation, the system further includes a parameter adjusting model, wherein the processing unit is configured for generating a model prompting word based on the result of speech recognition, wherein the model prompting word is configured for directing the parameter adjusting model to complete parameter adjustment; and generating the target signal adjusting parameter of the speech communication system using the parameter adjusting model and based on the model prompting word.

Wherein the parameter adjusting model is an artificial intelligence model, which is a software module configured for adjusting and processing a signal adjusting parameter. Through the parameter adjusting model, the electronic device is enabled to determine the communication fluency of the speech communication system for the at least one communication participant based on the result of speech recognition, and adjust an audio signal adjusting parameter, to output a target signal adjusting parameter.

In some optional implementation, the system further includes a model prompting word building module, wherein
the model prompting word building module is configured for generating the model prompting word based on the result of speech recognition, wherein the model prompting word includes at least one of: a task instruction, a source signal adjusting parameter for the at least one communication participant, the result of speech recognition corresponding to the at least one communication participant, a model output parameter, and a format of the model output parameter.

Embodiments of this disclosure may also relate to a computer program product, which includes computer program instructions. When the computer program instructions are run by a processor, the processor is enabled to perform the steps, of the method for compensating speech communication according to the embodiments of this disclosure, that are described in the "Illustrative method" section of this specification as described above.

The computer program product may be program code, written with one or any combination of a plurality of programming languages, that is configured to perform the operations in the embodiments of this disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, embodiments of this disclosure may further relate to a computer readable storage medium, which stores computer program instructions. When the computer program instructions are run by a processor, the processor is enabled to perform the steps, of the method for compensating speech communication according to the embodiments of this disclosure, that are described in the "Illustrative method" section of this specification as described above.

The computer readable storage medium may be one readable medium or any combination of a plurality of readable media. The readable medium may be a readable signal medium or a readable storage medium. The readable storage medium may include, for example but is not limited to electricity, magnetism, light, electromagnetism, infrared ray, or a semiconductor system, an apparatus, or a device, or any combination of the above. More specific examples (a non-exhaustive list) of the readable storage medium include: an electrical connection having one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments Note that however, advantages, superiorities, effects, etc., mentioned in this disclosure are merely examples but are not for limitation, and it cannot be considered that these advantages, superiorities, effects, etc., are necessary for each embodiment of this disclosure. Moreover, specific details described above are merely for examples and for ease of understanding, rather than limitations. The details described above do not limit that this disclosure must be implemented by using the foregoing specific details.

A person skilled in the art may make various modifications and variations to this disclosure without departing from the spirit and the scope of this application. In this way, if these modifications and variations of this application fall within the scope of the claims and equivalent technologies of the claims of this disclosure, this disclosure also intends to include these modifications and variations.

## Claims

1. A method for compensating speech communication, comprising:
obtaining (201) a first audio signal corresponding to at least one communication participant, and determining (504, 603), based on a result of speech recognition on the first audio signal, communication fluency of a speech communication system regarding the at least one communication participant, as well as a factor contributing to the communication fluency;
determining (202, 604), based on the communication fluency and the factor contributing to the communication fluency, a target signal adjusting parameter of the speech communication system for the at least one communication participant; and
adjusting (203, 506, 605), based on the target signal adjusting parameter, a second audio signal corresponding to the at least one communication participant, to obtain and play a third audio signal, wherein the second audio signal is an audio signal which is obtained regarding the at least one communication participant and is subsequent to the first audio signal in a time sequence.

2. The method according to claim 1, wherein the determining, based on the communication fluency and the factor contributing to the communication fluency, a target signal adjusting parameter of the speech communication system for the at least one communication participant comprises:
determining (221) the communication fluency of the at least one communication participant based on a frequency of appearance of a fluency-indicative keyword in the result of speech recognition corresponding to the at least one communication participant;
determining (222) the factor contributing to the communication fluency based on a semantic feature of the fluency-indicative keyword, and determining, based on the factor contributing to the communication fluency, a to-be-adjusted signal adjusting parameter of the speech communication system for the at least one communication participant, wherein the to-be-adjusted signal adjusting parameter comprises at least one of: a source acoustic feedback control coefficient, a source sound source separation coefficient, a source volume gain, and a source noise reduction coefficient; and
adjusting (223), based on the communication fluency, the to-be-adjusted signal adjusting parameter, to obtain the target signal adjusting parameter of the speech communication system for the at least one communication participant.

3. The method according to claim 2, wherein the obtaining a first audio signal corresponding to at least one communication participant comprises:
obtaining (501) at least one raw audio signal acquired respectively in at least one sound zone in a target space;
performing (502) acoustic feedback suppression, sound source separation, and sound source localization on the at least one raw audio signal, to obtain at least one separate audio signal corresponding respectively to the at least one communication participant; and
performing (503) noise reduction and automatic gain processing on the at least one separate audio signal, to obtain the first audio signal corresponding to the at least one communication participant.

4. The method according to claim 3, wherein the adjusting, based on the communication fluency, the to-be-adjusted signal adjusting parameter, to obtain the target signal adjusting parameter of the speech communication system for the at least one communication participant comprises:
generating (505), based on the to-be-adjusted signal adjusting parameter for the at least one communication participant and the communication fluency of the at least one communication participant, at least one of a target acoustic feedback control coefficient, a target sound source separation coefficient, a target volume gain, and a target noise reduction coefficient of the speech communication system for the at least one communication participant.

5. The method according to claim 2, wherein the obtaining a first audio signal corresponding to at least one communication participant further comprises:
obtaining (601) a near-end audio signal corresponding to a near-end participant located in a target space and a far-end audio signal corresponding to a far-end participant located at a far end; and
performing (602) echo suppression, noise reduction, and automatic gain processing on the near-end audio signal and the far-end audio signal, to obtain the first audio signal.

6. The method according to any one of claims 1 to 5, wherein the adjusting, based on the target signal adjusting parameter, a second audio signal corresponding to the at least one communication participant comprises:
adjusting the second audio signal corresponding to the at least one communication participant based on one of a target acoustic feedback control coefficient, a target sound source separation coefficient, a target volume gain, and a target noise reduction coefficient, to obtain the third audio signal.

7. An apparatus for compensating speech communication, comprising:
a first determining module (71), configured for obtaining a first audio signal corresponding to at least one communication participant, and determining, based on a result of speech recognition on the first audio signal, communication fluency of a speech communication system regarding the at least one communication participant, as well as a factor contributing to the communication fluency;
a second determining module (72), configured for determining, based on the communication fluency and the factor contributing to the communication fluency, a target signal adjusting parameter of the speech communication system for the at least one communication participant; and
a signal adjusting module (73), configured for adjusting, based on the target signal adjusting parameter, a second audio signal corresponding to the at least one communication participant, to obtain and play a third audio signal, wherein the second audio signal is an audio signal which is obtained regarding the at least one communication participant and is subsequent to the first audio signal in a time sequence.

8. The apparatus according to claim 7, wherein the second determining module (72) comprises:
a first determining sub-module (721), configured for determining the communication fluency of the at least one communication participant based on a frequency of appearance of a fluency-indicative keyword in the result of speech recognition corresponding to the at least one communication participant;
a second determining sub-module (722), configured for determining the factor contributing to the communication fluency based on a semantic feature of the fluency-indicative keyword, and determining, based on the factor contributing to the communication fluency, a to-be-adjusted signal adjusting parameter of the speech communication system for the at least one communication participant, wherein the to-be-adjusted signal adjusting parameter comprises at least one of: a source acoustic feedback control coefficient, a source sound source separation coefficient, a source volume gain, and a source noise reduction coefficient; and
an adjusting sub-module (723), configured for adjusting, based on the communication fluency, the to-be-adjusted signal adjusting parameter, to obtain the target signal adjusting parameter of the speech communication system for the at least one communication participant.

9. The apparatus according to claim 8, further comprising:
a first obtaining module (74), configured for obtaining at least one raw audio signal acquired respectively in at least one sound zone in a target space;
a first processing module (75), configured for performing acoustic feedback suppression, sound source separation, and sound source localization on the at least one raw audio signal, to obtain at least one separate audio signal corresponding respectively to the at least one communication participant; and
a second processing module (76), configured for performing noise reduction and automatic gain processing on the at least one separate audio signal, to obtain the first audio signal corresponding to the at least one communication participant.

10. A system for compensating speech communication, for implementing the method according to any one of claims 1 to 6, the system comprising: at least one microphone, a processing unit, and a device for compensating speech communication, wherein
the at least one microphone is configured for the obtaining a first audio signal corresponding to at least one communication participant;
the processing unit is configured for the determining, based on a result of speech recognition on the first audio signal, communication fluency of a speech communication system regarding the at least one communication participant, as well as a factor contributing to the communication fluency, and the determining, based on the communication fluency and the factor contributing to the communication fluency, a target signal adjusting parameter of the speech communication system for the at least one communication participant; and
the device for compensating speech communication is configured for the adjusting, based on the target signal adjusting parameter, a second audio signal corresponding to the at least one communication participant, to obtain and play a third audio signal, wherein the second audio signal is an audio signal which is obtained regarding the at least one communication participant and is subsequent to the first audio signal in a time sequence.

11. The system according to claim 10, further comprising a parameter adjusting model, wherein
the processing unit is configured for generating a model prompting word based on the result of speech recognition, wherein the model prompting word is configured for directing the parameter adjusting model to complete parameter adjustment; and generating the target signal adjusting parameter of the speech communication system using the parameter adjusting model and based on the model prompting word.

12. The system according to claim 11, further comprising a model prompting word building module, wherein
the model prompting word building module is configured for generating the model prompting word based on the result of speech recognition, wherein the model prompting word comprises at least one of: a task instruction, a source signal adjusting parameter for the at least one communication participant, the result of speech recognition corresponding to the at least one communication participant, a model output parameter, and a format of the model output parameter.

13. A computer-readable storage medium, storing a computer program for implementing the method according to any one of claims 1 to 6.

14. An electronic device, comprising:
a processor (11); and
a memory (12) configured for storing processor-executable instructions, wherein
the processor (11) is configured for reading and executing the processor-executable instructions in the memory (12) to implement the method according to any one of claims 1 to 6.

15. A computer program product, comprising computer program instructions, wherein when executed by a processor, the computer program instructions implement the method according to any one of claims 1 to 6.
